# EUROPÄISCHE PATENTSCHRIFT

(11) **EP 0 856 441 B1**
(45) Veröffentlichungstag und Bekanntmachung des Hinweises auf die Patenterteilung: **12.12.2001**
(21) Anmeldenummer: 97116534.5
(22) Anmeldetag: 23.09.1997
(51) Int. Cl.: B60R 22/20

(54) **Höhenversteller für Umlenkbeschläge von Fahrzeug-Sicherheitsgurten**
Height-adjusting device for guide loops of vehicle seat belts
Dispositif de réglage en hauteur pour ancrages de renvoi de ceintures de sécurité de véhicules

(30) Priorität: 30.01.1997 DE 29701481 U
(43) Veröffentlichungstag der Anmeldung: 05.08.1998
(73) Patentinhaber: Griesemer, Albert, 57462 Olpe-Biggesee (DE)
(72) Erfinder: Griesemer, Albert, 57462 Olpe-Biggesee (DE); Kreim, Else, 64572 Büttelborn (DE)
(74) Vertreter: Grommes, Karl F., Dr.

(56) Entgegenhaltungen:
- EP-A- 0 186 830
- EP-A- 0 685 373
- FR-A- 2 564 792
- GB-A- 2 205 030
- US-A- 4 971 359

## Beschreibung

### Technisches Gebiet

Die Erfindung betrifft einen Höhenversteller für Umlenkbeschläge von Fahrzeug-Sicherheitsgurten gemäß dem Oberbegriff von Anspruch 1, wie beispielsweise in der EP-A-0 685 373 beschrieben.

### Stand der Technik

Höhenversteller der genannten Art sind in mannifaltiger Ausgestaltung bekannt. Dem Zuge der Zeit folgend, werden an sie immer höhere Anforderungen gestellt. Einerseits sollen sie zur Sicherheit selbst unter extremen Unfallbedingungen beitragen, andererseits sollen Aufwand und insbesondere Gestehungskosten aus Wettbewerbsgründen möglichst niedrig liegen.

Der Grundforderung nach Stabilität und Zuverlässigkeit wird vor allem durch Materialauswahl und Materialstärke Rechnung getragen. Es ergeben sich dann allerdings auch teilweise schwere Konstruktionen, was aus anderen Gründen weniger erwünscht ist. So hat man auch versucht, durch eine Vergütung des Materials eine stärkere Dimensionierung überflüssig zu machen. Das aber ist nur bis zu einem gewissen Grade möglich; außerdem werden die damit einhergehenden verhältnismäßig hohen Gestehungskosten als problematisch empfunden.

### Darstellung der Erfindung

Hier setzt nun die Erfindung an. Sie will einen Höhenversteller der eingangs genannten Art so weiterbilden, daß er einerseits für hohe Belastungen taugt, andererseits aber einfach und preiswert herzustellen ist.

Gelöst wird diese Aufgabe mit den Merkmalen des Anspruchs 1. Zweckmäßige Weiterbildungen sind in den Unteransprüchen angegeben.

Bei der Erfindung kann übliches Material zum Einsatz kommen. Trotzdem wird eine extrem hohe Zuverlässigkeit erreicht. Diese beruht zum einen auf der Festigkeit der Führungsschiene infolge ihrer besonderen Formgebung und zum anderen auf dem weitreichenden Arretiermechanismus zwischen Verstellteil und Führungsschiene. Dabei können das Verstellteil und das damit zusammenwirkende Sperrteil samt Metallfeder von recht einfacher Grundform sein.

Der Bedienungskomfort läßt sich mit Hilfe einfacher Betätigungshebel steigern. Auch lassen sich die erfindungsgemäßen Elemente zur weiteren Vereinfachung sonstiger Funktionen ausnutzen, insbesondere dem Vorrasten und Rückstellen. Damit wird die der Erfindung zugrundeliegende Aufgabe sozusagen auf breiter Front gelöst.

### Kurze Beschreibung der Zeichnung

Die Erfindung wird nachstehend an Hand der Zeichnung für bevorzugte Ausführungsbeispiele noch näher beschrieben. Darin zeigen:
- Fig. 1: Einzelteile eines erfindungsgemäßen Höhenverstellers vor ihrem Zusammenbau in perspektivischer Ansicht,
- Fig. 2: einen komplettierten Höhenversteller in Seitenansicht, teilweise geschnitten,
- Fig. 3: den Gegenstand von Fig. 2 in Draufsicht, teilweise geschnitten,
- Fig. 4: den Gegenstand von Fig. 2 im Schnitt entlang der Linie A - A,
- Fig. 5: den Gegenstand von Fig. 2 im Schnitt entlang der Linie B - B,
- Fig. 6: ein von den vorhergehenden Figuren etwas abweichendes Verstellteil in perspektivischer Ansicht,
- Fig. 7: den Gegenstand von Fig. 6 samt Gewindebuchse, in eine Führungsschiene eingesetzt, im Querschnitt,
- Fig. 8: einen anderen Höhenversteller mit einer speziellen Federkombination zum Vorrasten und Arretieren in Seitenansicht, teilweise geschnitten,
- Fig. 9: eine von den vorhergehenden Figuren etwas abweichende Druckfeder, komprimiert, in Seitenansicht,
- Fig. 10: den Gegenstand von Fig. 9, expandiert, in perspektivischer Ansicht,
- Fig. 11: eine weitere Ausführungsform einer Druckfeder, expandiert, in Seitenansicht,
- Fig. 12: den Gegenstand von Fig. 11 in perspektivischer Ansicht,
- Fig. 13: eine andere Ausführungsform einer Druckfeder, nämlich in Rechteckform, in Vorderansicht,
- Fig. 14: den Gegenstand von Fig. 13, komprimiert, in Seitenansicht,
- Fig. 15: den Gegenstand von Fig. 14, expandiert, und
- Fig. 16: den Gegenstand von Fig. 15 im Schnitt entlang der Linie C - C.

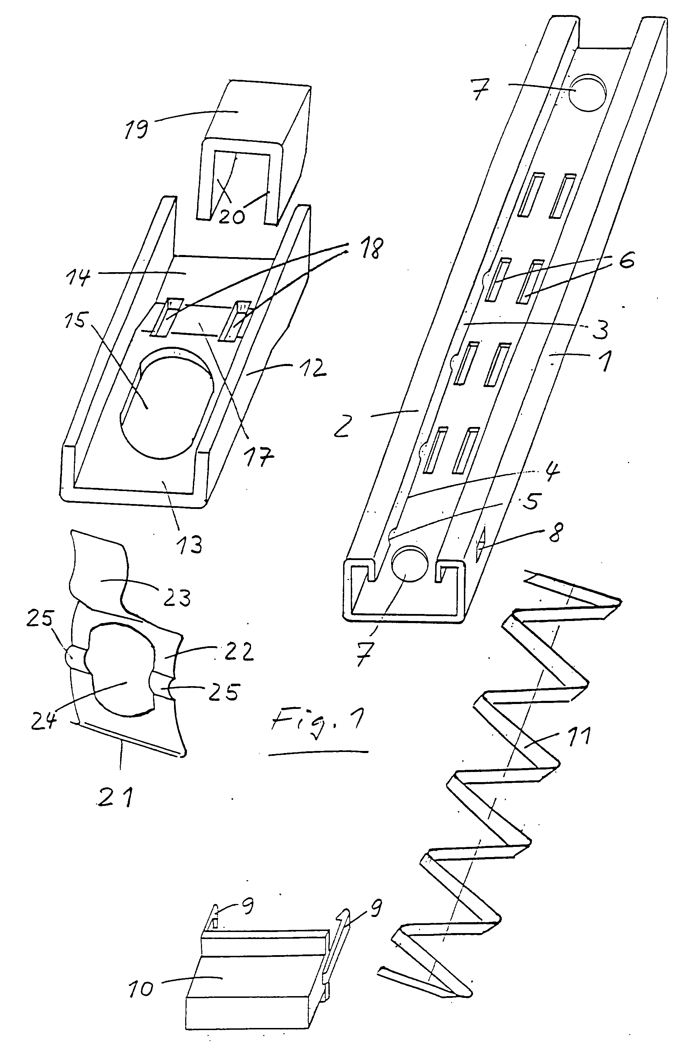

Nach Figur 1 weist eine Führungsschiene 1 einen C-förmigen Querschnitt auf, wobei sich an die einwärts gerichteten Schenkel 2 nach innen abgewinkelte Enden 3 anschließen. Letztere bilden insgesamt Verstärkungs- und Führungsstege. Die Endstege 3 zeigen an ihrer hinteren Kante 4 Ausnehmungen 5. Die Führungsschiene 1 kann - wie dargestellt - geradlinig verlaufen. Sie kann in ihrem Verlauf aber auch an ihre Tragfläche, d.i. in der Regel eine Fahrzeugsäule, angepaßt sein und insbesondere konkav gewölbt sein. Im mittleren Bereich der Führungsschiene 1 erscheinen ansonsten paarweise angeordnete Aussparungen 6. Bohrungen 7 am unteren und oberen Ende dienen der Anbringung an einer Tragfläche.

Schließlich sind am unteren Ende der Führungsschiene 1 seitlich noch Ausnehmungen 8 feststellbar, welche zusammen mit biegsamen Krallen 9 einer Verschlußkappe 10 aus Kunststoff einen Clipmechanismus zur Sicherung der Verschlußkappe 10 an der Führungsschiene 1 bilden. Dabei nimmt die Verschlußkappe 10 das Ende einer zickzackförmigen Druckfeder 11 auf, welche innerhalb der Führungsschiene 1 und insbesondere entlang den Endstegen 3 geführt ist und einen Kraftspeicher verkörpert. Die Druckfeder 11 stützt sich zur anderen Seite gegen ein Verstellteil 12 ab, wie es zunächst grundsätzlich aus Figur 1 ersichtlich und in den folgenden Figuren bezüglich seiner Wirkungsweise erläutert ist.

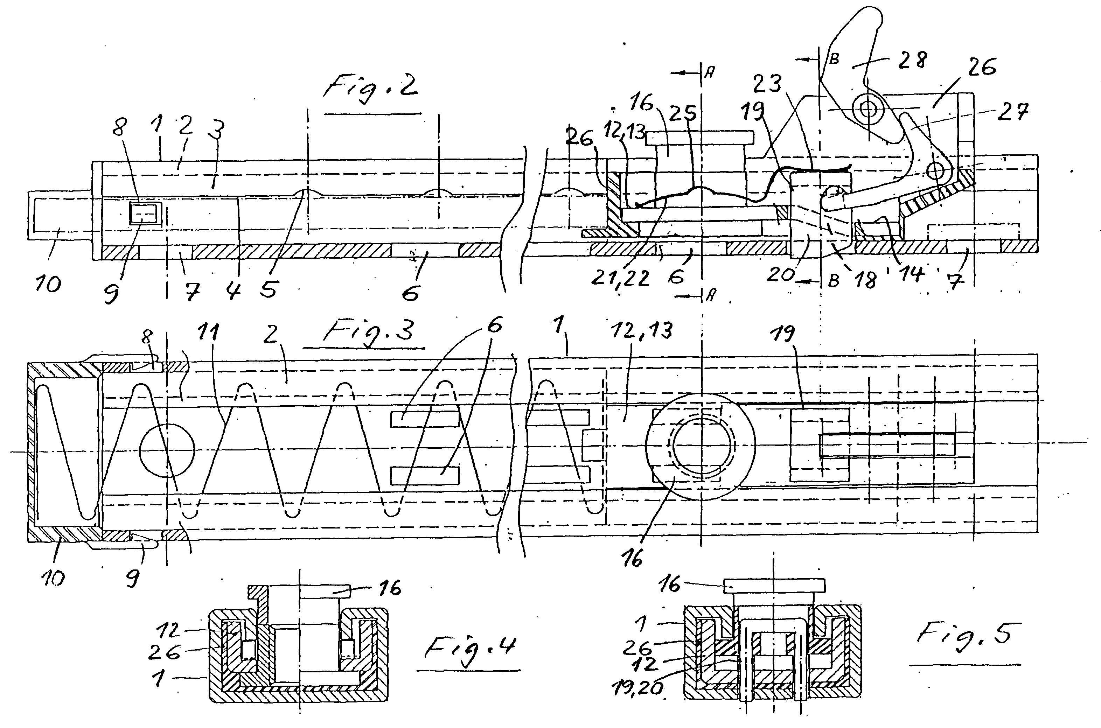

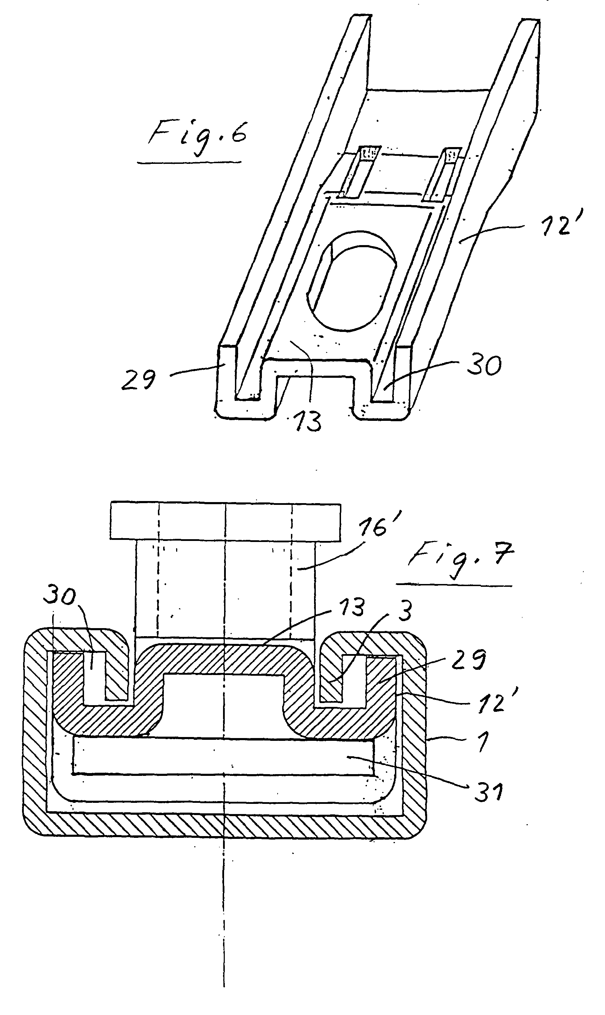

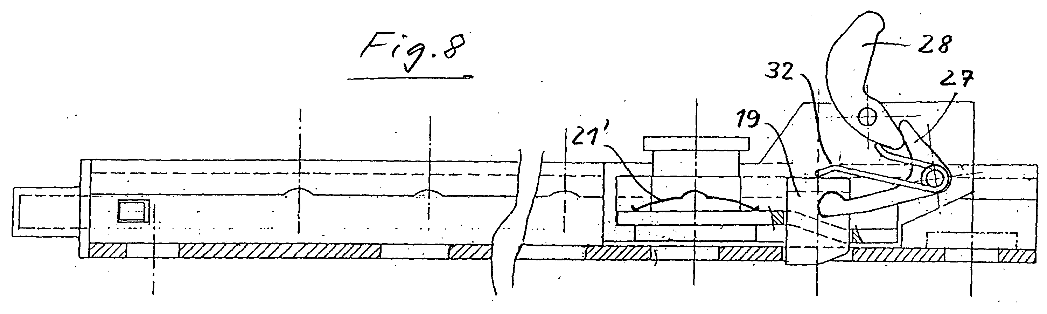

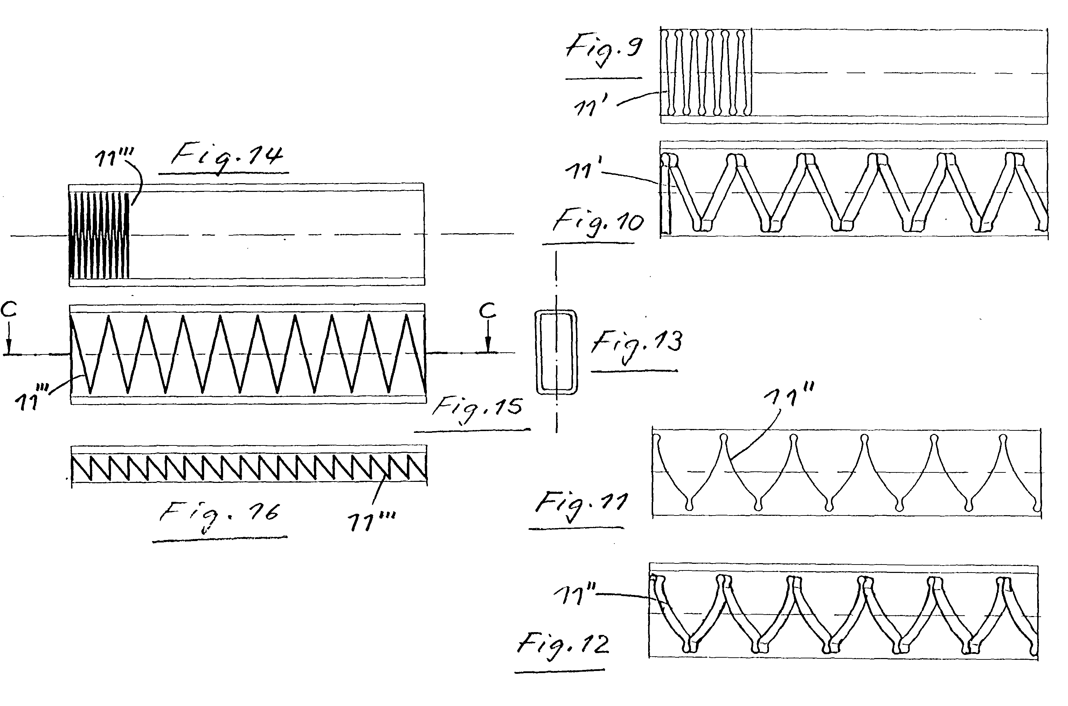

Das Verstellteil 12 besitzt eine - in Funktionsrichtung gesehen - untere Ebene 13, welche gegenüber einer oberen Ebene 14 vorspringt und eine längliche Ausnehmung 15 zur Aufnahme einer Gewindebuchse 16 (vgl. Figuren 2-5) aufweist. Die Ebenen 13 und 14 sind über eine Schräge 17 miteinander verbunden, welche über ein Paar Aussparungen 18 analog den Aussparungen 6 der Führungsschiene 1 verfügt. In beiden Fällen besitzen die Aussparungen 6, 18 eine längliche rechteckige Form. Diese kann ein vom Verstellteil 12 mitgeführtes Sperrteil 19 mit Rastnasen durchdringen, wie sie von seinen freien Schenkeln 20 gebildet werden. Das obere Ende ist dabei leicht abgeschrägt (vgl. Figur 2) im Interesse einer mühelosen Entriegelung. Insgesamt zeigt das Sperrteil 19 einen U-förmigen Querschnitt, ähnlich wie das Verstellteil 12 mit seinen abgewinkelten Begrenzungswänden.

Schließlich ist noch eine besonders geformte metallene Blattfeder 21 vorhanden, welche über eine leicht aufwärts gewölbte Grundfläche 22 verfügt, an die sich höhenversetzt ein fahnenförmiger Fortsatz 23 anschließt. Die Grundfläche 22 verfügt über eine Ausnehmung 24 für eine Gewindebuchse 16 analog dem Verstellteil 12, darüberhinaus über zwei sickenförmige Vorsprünge 25. Die Bedeutung vorgenannter Merkmale ergibt sich aus den folgenden Figuren.

Nach den Figuren 2 bis 5 sind das Verstellteil 12 samt Gewindebuchse 16, Sperrteil 19 und Blattfeder 21 in einen Käfig oder Schlitten 26 aus Kunststoff eingesetzt. Die gezeigte Arretierposition ist dadurch erreicht, daß die Aussparungen 6 der Führungsschiene 1 mit den Aussparungen 18 des Verstellteils 12 fluchten und diese Aussparungen von den freien Schenkeln 20 des Sperrteils 19 durchsetzt sind. In seiner Sperrposition wird das Sperrteil 19 mittels der Blattfeder 21 und insbesondere deren Fortsatz 23 elastisch gehalten. Die Grundfläche 22 kann mit ihren Vorsprüngen 25 in Eingriff mit den Ausnehmungen 5 der Führungsschiene 1 geraten, was der Vorrastung dient. Damit erfüllt die erfindungsgemäße Blattfeder 21 gegenüber bekannten Arretiermechanismen eine Doppelfunktion.

Um das Verstellteil 12 innerhalb der Führungsschiene 1 bewegen zu können, muß zunächst das Sperrteil 19 angehoben werden, wozu ein Kipphebel 27 samt Umlenkhebel 28 dienen. Der Kipphebel 27 greift dazu auf der der Blattfeder 21 abgewandten Seite am Sperrteil 19 an. Bei gelöstem, d.h. angehobenem Sperrteil 19 wird die zwischen Verstellteil 12 und Verschlußkappe 10 eingespannte Druckfeder 11 als Rückstellorgan wirksam, d.h. sie ist bestrebt, das Verstellteil 12 in seine obere Ausgangsposition zurückzuschieben. Umgekehrt entwickelt die Druckfeder 11 bei einer Abwärtsbewegung einen elastischen Widerstand, so daß zur Verstellung in eine untere Arretierposition der Umlenkbeschlag herabgezogen werden muß.

Nach Fig. 6 sind bei einem weitergebildeten Verstellteil 12' zwischen seinen Begrenzungswänden 29 und seiner vorspringenden unteren Ebene 13 Verstärkungs- und Führungsnuten 30 vorgesehen. Dadurch kommt es zu einer zusätzlichen Führung mit den Endstegen 3 der Führungsschiene 1. Diese Konstellation bedeutet gleichzeitig für den Belastungsfall eine Erhöhung der Sicherheit, da sich Führungsschiene 1 und Verstellteil 12' im Crashfall derart verklemmen, daß ein Aufbiegen der Führungsschiene 1 und ein Ausreißen des Verstellteils 12' quasi unmöglich werden. Dieser - durch die spezielle Formgebung erzielbare - Festigkeitszuwachs kann andererseits auch dazu genutzt werden, die Materialstärke weiter zu reduzieren.

Nach Fig. 7 ist ein Verstellteil 12' mit einer Gewindebuchse 16' versehen und in eine Führungsschine 1 eingesetzt. Im Unterschied zu der Gewindebuchse 16 der vorausgegangenen Figuren besitzt die Gewindebuchse 16' der Fig. 7 ein etwas verbreitertes Unterteil 31. Dieses ist in seinem Durchmesser so groß gewählt, daß bei Kraftschluß die Krafteinwirkung direkt in die beiden Begrenzungswände 29 des Verstellteils 12' erfolgt und somit eine direkte Kraftabstützung in der Führungsschiene 1 gegeben ist. Im Ergebnis kommt es im Crashfall zu einer Verkeilung zwischen Führungsschiene 1 und Verstellteil 12' und wird ein Ausreißen des Verstellteils 12' verhindert. Ebensowenig ist ein Ausziehen des Unterteils oder Bundes 31 der Gewindebuchse 16' zwischen den Begrenzungswänden 29 des Verstellteils 12' hindurch möglich.

Fig. 8 läßt einen anderen Höhenversteller erkennen, nämlich mit einer speziellen Federkombination zum Vorrasten und Arretieren. Während eine Blattfeder 21' (ohne einen Fortsatz) für das Vorrasten sorgt, dient eine Schenkelfeder 32 der Arretierung. Dazu ist sie auf die Achse des Kipphebels 27 aufgesetzt und hält mit einem Schenkel das Sperrteil 19 unter Druckspannung, während sie sich mit dem anderen Schenkelende an dem unteren Hebelarm des Umlenkhebels 28 abstützt. Diese Ausführungsform kann als besonders reaktionsschnell angesehen werden.

Die Fig. 9 bis 16 verdeutlichen, daß Druckfedern recht unterschiedlicher Ausführungsform zum Einsatz kommen können, insbesondere auch solche mit besonders geformten Umlenkbereichen und gebogenen Abschnitten zwischen ihren Umlenkbereichen, wie sie in den Fig. 9 und 10 mit der Bezugsziffer 11' bzw. in den Fig. 11 und 12 mit der Bezugsziffer 11'' bezeichnet sind. Schließlich eignen sich auch besonders Rechteck-Druckfedern 11''', wie sie in den Fig. 13-16 veranschaulicht sind.

Zusammenfassend läßt sich sagen, daß der erläuterte erfindungsgemäße Höhenversteller übersichtlich aufgebaut, einfach zu montieren und bequem zu handhaben ist und sich durch hohe Zuverlässigkeit bei geringem Gewicht und niedrigen Gestehungskosten auszeichnet.

### Bezugszeichenliste

- 1: Führungsschiene
- 2: Schenkel
- 3: Ende, Endsteg
- 4: Kante
- 5: Ausnehmung
- 6: Aussparung
- 7: Bohrung
- 8: Ausnehmung
- 9: Kralle
- 10: Verschlußkappe
- 11: Druckfeder
- 11': Druckfeder
- 11'': Druckfeder
- 11''': 'Druckfeder
- 12: Verstellteil
- 12': Verstellteil
- 13: Ebene
- 14: Ebene
- 15: Ausnehmung
- 16: Gewindebuchse
- 16': Gewindebuchse
- 17: Schräge
- 18: Aussparung
- 19: Sperrteil 1
- 20: Schenkel
- 21: Blattfeder
- 21': Blattfeder
- 22: Grundfläche
- 23: Fortsatz
- 24: Ausnehmung
- 25: Vorsprung
- 26: Käfig, Schlitten
- 27: Kipphebel
- 28: Umlenkhebel
- 29: Begrenzungswand
- 30: Verstärkungs-/ Führungsnut
- 31: Unterteil, Bund
- 32: Schenkelfeder

## Patentansprüche

1. Höhenversteller für Umlenkbeschläge von Fahrzeug-Sicherheitsgurten, bestehend aus
- einer mit dem Fahrzeug verbindbaren Führungsschiene (1),
- einem in der Führungsschiene verschiebbaren Verstellteil (12,12') mit einer Gewindebuchse (16, 16') zur Aufnahme eines Umlenkbeschlages,
- einem Arretiermechanismus für das Verstellteil in Bezug auf die Führungsschiene,
- einem elastischen Vorrastorgan (21,21') zur überleitung des Verstellteils in die jeweils nächstliegende Arretierposition,
- einem zwischen unterer und oberer Endstellung wirksamen elastischen Rückstellorgan (11,11',11'',11''') für das Verstellteil sowie
- ggfs. einem die Arretierwirkung aufhebenden Verstellhebel (27, 28), **dadurch gekennzeichnet,**
- **daß** die Führungsschiene (1) im wesentlichen einen etwa C-förmigen Querschnitt aufweist, wobei sich an die einwärts gerichteten Schenkel (2) jeweils nach innen abgewinkelte Enden (3) anschließen,
- **daß** das Verstellteil (12, 12') entlang dieser insgesamt Stege bildenden Enden (3) geführt ist,
- **daß** das Verstellteil (12, 12') und die Führungsschiene (1) in ihrem mittleren Bereich über paarweise angeordnete Aussparungen (6, 18) verfügen,
- **daß** ein vom Verstellteil (12, 12') mitgeführtes Sperrteil (19) die Aussparungen (6, 18) zur Arretierung durchsetzt,
- **daß** zur Aufrechterhaltung der Arretierposition am Verstellteil (12, 12') eine das Sperrteil (19) in die Aussparungen (6, 18) zwingende Metallfeder (21, 32) vorgesehen ist und
- **daß** das Rückstellorgan eine Druckfeder (11, 11', 11'', 11''') ist.

2. Höhenversteller nach Anspruch 1, **dadurch gekennzeichnet, daß** das Sperrteil (19) einen im wesentlichen U-förmigen Querschnitt aufweist, wobei die freien Schenkel (20) Rastnasen bilden.

3. Höhenversteller nach Anspruch 1 oder 2, **dadurch gekennzeichnet, daß** das Verstellteil (12, 12') über eine - im befestigten Zustand der Führungsschiene (1)
- zurückspringende obere Ebene (14) sowie eine vorspringende untere Ebene (13) verfügt, welche über eine Schräge (17) miteinander verbunden sind, und daß die Aussparungen (18) für das Sperrteil (19) in der Schräge (17) angeordnet sind.

4. Höhenversteller nach einem der Ansprüche 1 bis 3, **dadurch gekennzeichnet, daß** das Verstellteil (12, 12') samt Gewindebuchse (16, 16'), Sperrteil (19) und Metallfeder (21, 32) in einen Käfig oder Schlitten (26) aus Kunststoff eingesetzt und dabei ein Hebel (27) oder eine Hebel-Kombination (27, 28) zum Anheben und Entriegeln des Sperrteils (19) vorgesehen ist.

5. Höhenversteller nach einem der Ansprüche 1 bis 4, **dadurch gekennzeichnet, daß** eine Blattfeder (21, 21') vorgesehen ist, welche seitlich bis unter die Endstege (3) reicht, wobei einerseits die Blattfeder (21, 21') den Endstegen (3) zugewandte Vorsprünge (25) und andererseits die Endstege (3) entsprechende Ausnehmungen (5) - oder umgekehrt - für einen elastischen Eingriff zum Zwecke des Vorrastens aufweisen.

6. Höhenversteller nach Anspruch 5, **dadurch gekennzeichnet, daß** die Vorsprünge (25) an der Blattfeder (21) nach Art einer Sicke gebildet sind.

7. Höhenversteller nach einem der Ansprüche 1 bis 6, **dadurch gekennzeichnet, daß** die Endstege (3) als Begrenzung und Führung für eine zwischen Verstellteil (12, 12') und unterem Ende der Führungsschiene (1) eingesetzte Druckfeder (11, 11', 11'', 11''') vorgesehen sind.

8. Höhenversteller nach Anspruch 7, **dadurch gekennzeichnet, daß** am unteren Ende der Führungsschiene (1) eine als Halterung und ggfs. auch als Magazin für die Druckfeder (11, 11', 11'', 11''') dienende Verschlußkappe (10) aus Kunststoff angebracht ist.

9. Halterung nach Anspruch 8, **dadurch gekennzeichnet, daß** die Verschlußkappe (10) mit der Führungsschiene (1) über einen Clipmechanismus (8, 9) verbindbar ist.

10. Höhenversteller nach einem der Ansprüche 3-9 **dadurch gekennzeichnet, daß** zwischen den Begrenzungswänden (29) des Verstellteils (12') und der vorspringenden unteren Ebene (13) Verstärkungs- und Führungsnuten (30) vorgesehen sind.

11. Höhenversteller nach einem der Ansprüche 1 bis 10, **dadurch gekennzeichnet, daß** die Führungsschiene (1) in ihrer Längserstreckung der Kontur ihrer Tragfläche (=Fahrzeugsäule) angepaßt ist.

## Claims

1. Height adjuster for deflector mountings of vehicle safety belts, consisting of
- a guide rail (1) connectable to the vehicle,
- a displacement portion (12, 12') slidable in the guide rail, with a threaded bush (16, 16') for receiving a deflector mounting,
- a locking mechanism for the displacement portion in relation to the guide rail,
- a resilient preliminary latch member (21, 21') for transfer of the displacement portion to the next locking position,
- a resilient return member (11, 11', 11'', 11''') operative between lower and upper end positions for the displacement portion and
- if required a displacement lever (27, 28) cancelling the locking action,
**characterised in that**
- the guide rail (1) substantially has an approximately C-shaped cross-section, wherein the inwardly directed arms (2) are respectively adjoined by inwardly angled ends (3),
- the displacement portion (12, 12') is guided along these ends (3) which altogether form webs,
- the displacement portion (12, 12') and the guide rail (1) in its central region have openings (6, 18) arranged in pairs,
- a stop portion (19) entrained by the displacement portion (12, 12') passes through the openings (6, 18) for locking,
- to maintain the locking position on the displacement portion (12, 12') is provided a metal spring (21, 32) which forces the stop portion (19) into the openings (6, 18) and
- the return member is a compression spring (11; 11', 11'', 11''').

2. Height adjuster according to claim 1, **characterised in that** the stop portion (19) has a substantially U-shaped cross-section, wherein the free arms (20) form latch projections.

3. Height adjuster according to claim 1 or 2,
**characterised in that** the displacement portion (12, 12') has a receding upper level (14) and a protruding lower level (13) in the fixed state of the guide rail (1), which are connected to each other by a slope (17), and **in that** the openings (18) for the stop portion (19) are arranged in the slope (17).

4. Height adjuster according to one of claims 1 to 3,
**characterised in that** the displacement portion (12, 12') together with threaded bush (16, 16'), stop portion (19) and metal spring (21, 32) is inserted in a plastic cage or carriage (26) and at the same time a lever (27) or lever combination (27, 28) is provided for lifting and unlocking the stop portion (19).

5. Height adjuster according to one of claims 1 to 4,
**characterised in that** there is provided a leaf spring (21, 21') which extends laterally to below the end webs (3), wherein on the one hand the leaf spring (21, 21') comprises protuberances (25) facing towards the end webs (3) and on the other hand the end webs (3) comprise corresponding recesses (5) - or vice versa - for resilient engagement for the purpose of preliminary latching.

6. Height adjuster according to claim 5, **characterised in that** the protuberances (25) are formed on the leaf spring (21) after the fashion of a bead.

7. Height adjuster according to one of claims 1 to 6,
**characterised in that** the end webs (3) are provided as a boundary and guide for a compression spring (11, 11', 11'', 11''') inserted between the displacement portion (12, 12') and the lower end of the guide rail (1).

8. Height adjuster according to claim 7, **characterised in that** at the lower end of the guide rail (1) is mounted a plastic closure cap (10) which serves as a support and if required also as a magazine for the compression spring (11, 11', 11'', 11''').

9. Support according to claim 8, **characterised in that** the closure cap (10) is connectable to the guide rail (1) by a clip mechanism (8, 9).

10. Height adjuster according to one of claims 3-9,
**characterised in that** between the boundary walls (29) of the displacement portion (12') and the protruding lower level (13) are provided reinforcement and guide grooves (30).

11. Height adjuster according to one of claims 1 to 10,
**characterised in that** the guide rail (1) in its longitudinal extent is adapted to the contour of its supporting surface (= vehicle pillar).

## Revendications

1. Dispositif de réglage en hauteur des ancrages de renvoi de ceintures de sécurité de véhicules, constitué
- d'une glissière de guidage (1), susceptible d'être reliée au véhicule,
- d'une partie de réglage (12, 12'), déplaçable à l'intérieur de la glissière de guidage, avec une douille taraudée (16, 16') pour recevoir un ancrage de renvoi,
- d'un mécanisme de blocage pour la partie du réglage, agissant par rapport à la glissière de guidage,
- d'un organe de pré-encliquetage (21, 21') élastique, pour faire passer la partie de réglage à la position de blocage chaque fois immédiatement suivante,
- d'un organe de rappel (11, 11', 11", 11"') élastique, agissant entre les positions finales inférieures et inférieures, pour la partie de réglage, ainsi que,
- le cas échéant, d'un levier de réglage (27, 28), susceptible de supprimer l'effet du blocage,
**caractérisé par le fait que**
- la glissière de guidage (1) présente essentiellement une section transversale à peu près en forme de C, des extrémités (3), coudées vers l'intérieur, se raccordant chaque fois à des branches (2) tournées vers l'intérieur,
- la partie de guidage (12, 12') est guidée le long de ces extrémités (3) formant globalement des nervures,
- la partie de guidage (12, 12') et la glissière de guidage (1) disposent d'évidements (6, 18) disposés par paires dans leur zone centrale,
- une partie de blocage (19), entraînée par la partie de réglage (12, 12'), traverse les évidements (6, 18) pour produire un blocage,
- un ressort métallique (21, 32), contraignant la partie de blocage (19) à se placer dans les évidements (6, 18), est prévu pour conserver la position bloquée sur la partie de réglage (12, 12'), et
- l'organe de rappel est un ressort de compression (11, 11', 11", 11''').

2. Dispositif de réglage en hauteur selon la revendication 1, **caractérisé par le fait que** la partie de blocage (19) présente une section transversale sensiblement en forme de U, les branches libres (20) formant des ergots d'encliquetage.

3. Dispositif de réglage en hauteur selon la revendication 1 ou 2, **caractérisé par le fait que** la partie de réglage (12, 12') dispose d'un plan supérieur (14) en retrait - lorsque la glissière de guidage (1) est à l'état fixé - ainsi que d'un plan inférieur (13) en saillie, plans qui sont reliés ensemble par l'intermédiaire d'une pente (17), et en ce que les évidements (18) prévus pour la partie de blocage (19) sont disposés dans la pente (17).

4. Dispositif de réglage en hauteur selon l'une des revendications 1 à 3, **caractérisé par le fait que** la partie de réglage (12, 12'), avec la douille taraudée (16, 16'), la partie de blocage (19) et le ressort métallique (21, 32), est insérée dans une cage ou un coulisseau (26) en matière synthétique, et un levier (27) ou une combinaison de leviers (27, 28) étant alors prévu(e) pour provoquer le soulèvement et le déverrouillage de la partie de blocage (19).

5. Dispositif de réglage en hauteur selon l'une des revendications 1 à 4, **caractérisé par le fait qu'**est prévu un ressort à lame (21, 21') qui, latéralement, va jusqu'aux nervures d'extrémité (3), d'une part, le ressort à lame (21, 21') présentant des saillies (25) tournées vers des nervures d'extrémité (3) et, d'autre part, les nervures d'extrémité (3) présentant des évidements (5) correspondants - ou l'inverse - pour produire une mise en prise élastique dans le but du pré-encliquetage.

6. Dispositif de réglage en hauteur selon la revendication 5, **caractérisé par le fait que** les saillies (25) sont formées à la manière d'une moulure sur le ressort à lame (21).

7. Dispositif de réglage en hauteur selon l'une des revendications 1 à 6, **caractérisé par le fait que** les nervures d'extrémité (3) sont prévues à titre de limitation et de guidage pour un ressort de compression (11, 11', 11", 11'''), inséré entre la partie de réglage (12, 12') et l'extrémité inférieure de la glissière de guidage (1).

8. Dispositif de réglage en hauteur selon la revendication 7, **caractérisé par le fait qu'**à l'extrémité inférieure de la glissière de guidage (1) est monté un capuchon de fermeture (10) en matière synthétique, servant de fixation et, le cas échéant également, de magasin pour le ressort de compression (11, 11', 11", 11''').

9. Fixation selon la revendication 8, **caractérisé par le fait que** le capuchon de fermeture (10) est susceptible d'être relié à la glissière de guidage (1) par l'intermédiaire d'un mécanisme à encliquetage (8, 9).

10. Dispositif de réglage en hauteur selon l'une des revendications 3 à 9, **caractérisé par le fait que** des rainures de renforcement et de guidage (30) sont prévues, entre les parois de délimitation (29) de la partie de réglage (12') et le plan inférieur (13) en saillie.

11. Dispositif de réglage en hauteur selon l'une des revendications 1 à 10, **caractérisé par le fait que** l'extension longitudinale de la glissière de guidage (1) est adaptée au contour de sa face porteuse (= colonne de véhicule).
